# EUROPEAN PATENT SPECIFICATION

(11) **EP 4 145 627 B1**
(45) Date of publication and mention of the grant of the patent: **22.10.2025**
(21) Application number: 21871010.1
(22) Date of filing: 27.07.2021
(51) Int. Cl.: H01Q 1/22, H01Q 1/52, H01Q 21/30, H01Q 23/00, H01Q 9/40

(54) **INTERACTIVE PANEL**
INTERAKTIVE TAFEL
PANNEAU INTERACTIF

(30) Priority: 22.09.2020 CN 202022089665 U
(43) Date of publication of application: 08.03.2023
(73) Proprietor: Guangzhou Shiyuan Electronics Co., Ltd., Guangzhou, Guangdong 510530 (CN)
(72) Inventor: DENG, Bingjie, Guangzhou, Guangdong 510530 (CN); HONG, Guofeng, Guangzhou, Guangdong 510530 (CN); CHEN, Yanxi, Guangzhou, Guangdong 510530 (CN)
(74) Representative: Grünecker Patent- und Rechtsanwälte PartG mbB
(86) International application number: PCT/CN2021/108601
(87) International publication number: WO 2022/062632

(56) References cited:
- CN-A- 101 470 971
- CN-A- 106 775 158
- CN-A- 109 994 007
- CN-U- 207 780 422
- CN-U- 207 946 628
- US-A1- 2005 237 262
- US-A1- 2005 237 262

## Description

### FIELD

The present disclosure relates to the field of antennas, and in particular to an interactive white board.

### BACKGROUND

With the development of technology and communication technique, the requirement of screen-to-body ratio of an interactive white board is getting higher and higher, and the development trend is gradually moving closer to a full screen.

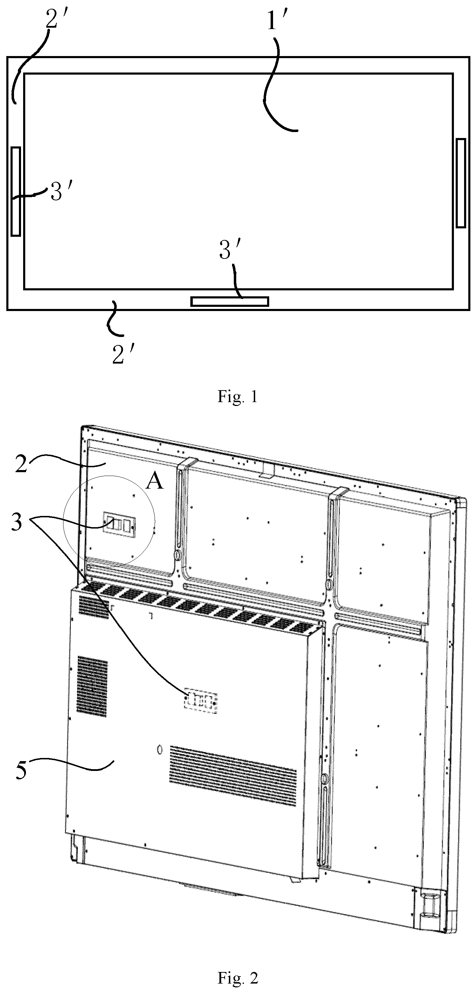

The realization of wireless communication function of the interactive white board requires an antenna to radiate and receive electromagnetic signals. As shown in Fig. 1, in the interactive white board, a display screen 1' is surrounded by a frame 2', and a back surface of the display screen 1' is a metal backboard. The connection of the metal backboard and the frame 2' makes the display screen 1', the frame 2' and the metal backboard connect integrally. At present, in the interactive white board, an antenna 3' is disposed inside the interactive white board and is located in a region of the frame 2'.

In the above-mentioned arrangement method of antennas, antennas require a certain clearance region, resulting in an increase in an area of the frame, and it is impossible to realize the design of a narrow frame or even a full screen of an interactive white board. CN 101470971A discloses an interactive white board, characterized by comprising: a display screen; an antenna assembly; and a mainboard, and the mainboard is electrically connected with the antenna assembly; CN 109994007A discloses a multimedia interconnected blackboard, comprising a frame, an interconnected board embedded in the frame, wherein the frame is further provided with a control panel and the interconnected board is provided with an infrared frame; CN 106775158A discloses a capacitive touch control electronic whiteboard, comprising an electronic whiteboard body, a Wi-Fi antenna and a Bluetooth antenna, wherein a computer mainframe PC is built in the electronic whiteboard body, and the Wi-Fi antenna and the Bluetooth antenna are fixed to a frame of the computer mainframe PC in an adhered mode; US 2005237262A1 discloses an attachment structure for an antenna, comprising a display block, an attachment base, and an antenna, wherein each of the attachment base and the antenna has a positioning element such that the antenna is attached to the attachment based positioned on the rea face side of the display block.

### SUMMARY

The purpose of embodiments of the present disclosure is to provide an interactive white board in order to solve a problem in the existing interactive white board that antennas being designed on the frame makes the interactive white board unable to use a metal frame, and that the interactive white board cannot be designed with a narrow frame or even a full screen.

For this purpose, embodiments of the present disclosure adopt the following technical solutions.

An interactive white board is provided, comprising:
a display screen;
a metal backboard, wherein the metal backboard is located on a back surface of the display screen, and is provided with through holes;
an antenna assembly, wherein the antenna assembly is disposed on a surface of the metal backboard facing away from the display screen, and is located in a display region of the display screen, and is disposed directly opposite to the through holes; and
a mainboard, wherein the mainboard is provided on the surface of the metal backboard facing away from the display screen, and is electrically connected with the antenna assembly.

The interactive white board of embodiments of the present disclosure includes a display screen, a metal backboard, an antenna assembly, and a mainboard, wherein the metal backboard is located behind the display screen and is provided with through holes, the antenna assembly is provided on a surface of the metal backboard facing away from the display screen, and is located in the display region of the display screen, the antenna assembly is disposed directly opposite to the through holes, the mainboard is provided on the surface of the metal backboard facing away from the display screen, and the antenna assembly is electrically connected with the mainboard. In embodiments of the present disclosure, the antenna assembly is disposed in the display region of the display screen, and can radiate signals forward through the through holes on the metal backboard and the display screen, without occupying a frame region of the interactive white board, such that the frame can be made narrower, which improves a screen-to-body ratio of the interactive white board and even realizes a full-screen design.

### BRIEF DESCRIPTION OF THE DRAWINGS

Thereinafter, the present disclosure will be further described in detail according to the accompanying drawings and embodiments.
Fig. 1 is a schematic diagram of an antenna layout of an interactive white board in the prior art.
Fig. 2 is a schematic diagram of a position of an antenna assembly of an interactive white board according to an embodiment of the present disclosure.
Fig. 3 is an exploded schematic diagram of an interactive white board in an embodiment of the present disclosure.
Fig. 4 is the schematic diagram of Part A in Fig. 3.
Fig. 5 is a schematic diagram of an interactive white board after an antenna assembly is disassembled according to an embodiment of the present disclosure.
Fig. 6 is the schematic diagram of Part B in Fig. 5.
Fig. 7 is a schematic diagram of exposing a backlight layer after the metal back plate is disassembled in an embodiment of the present disclosure.
Fig. 8 is a schematic diagram of relative positions of the through holes and light bars in the embodiment of the present disclosure.
Fig. 9 is a schematic diagram of an interactive white board after a metal back cover is disassembled according to the embodiment of the present disclosure.
Fig. 10 is a schematic diagram of an interactive white board provided with a decorative piece in an embodiment of the present disclosure.
Fig. 11 is a schematic diagram of an interactive white board after the decorative piece is disassembled according to an embodiment of the present disclosure.
Fig. 12 is a schematic diagram of an antenna assembly according to an embodiment of the present disclosure.
Fig. 13 is a schematic diagram of through holes and extruded holes of the metal backboard in the embodiment of the present disclosure.
Fig. 14 is a schematic diagram of a bulge of a metal backboard in an embodiment of the present disclosure.
Figs. 15-16 are schematic diagrams of a shielding cover of the antenna assembly in the embodiment of the present disclosure.
Figs. 17-22 are schematic diagrams of antenna units of an antenna assembly in an embodiment of the present disclosure.

In the figures,
1. Display screen; 11. Display layer; 12. Backlight layer; 121. Light bar; 2. Metal backboard; 21. Through hole; 22. Extruded hole; 23. Bulge; 3. Antenna assembly; 31. Dielectric substrate; 311. Lock hole; 32. Antenna unit; 321. First antenna unit; 3211. First feeder stub; 3212. First L-shaped stub; 32121. First stub; 32122. Second stub; 3213. First T-shaped stub; 32131. Third stub; 32132. Fourth stub; 3214. First ground stub; 32141. Fifth stub; 32142. Sixth stub; 3215. First boundary; 3216. Second boundary; 3217. Third boundary; 3218. L-shaped ground stub; 32181. Ninth stub; 32182. Tenth stub; 322. Second antenna unit; 3221. Second feeder stub; 3222. Second L-shaped stub; 32221. Seventh stub; 32222. Eighth stub; 3223. Second T-shaped stub; 3224. Second ground stub; 3225. Fourth boundary; 33. Radio frequency chip; 34. Second metal shielding cover; 35. First metal shielding cover; 36. First signal transmission line; 37. Surface covered with copper; 38. First square clearance region; 39. Second square clearance region; 40. Second signal transmission line; 4. Frame; 5. Metal back cover; 6. Mainboard; 7. Decorative piece.

### DESCRIPTION OF THE PREFERRED EMBODIMENTS

In order to make the technical problems to be solved, the technical solutions to be adopted and the technical effects to be achieved by the present disclosure more clear, the technical solutions of embodiments of the present disclosure will be further described in detail hereinafter in combination with the accompanying drawings. Obviously, the described embodiments are only a part of embodiments of the present disclosure, not all of embodiments of the present disclosure. Based on the embodiments of the present disclosure, all other embodiments obtained by those skilled in the art without creative work belong to the claimed scope of the present disclosure.

In the description of the present disclosure, unless otherwise specified and limited, the terms "connected with/to", "connected" and "fixed" should be interpreted broadly. For example, they can be fixedly connected, detachably connected, or integrated. It can be a mechanical connection or an electrical connection. And they can be directly connected or indirectly connected through an intermediate medium, or, they can be the connection between two components or the interaction relationship between two components. For those skilled in the art, the concrete meaning of the above-mentioned terms in the present disclosure can be understood under concrete circumstances.

In the present disclosure, unless expressly stipulated and defined otherwise, a first feature being "above" or "below" a second feature may comprise that the first feature directly contacts with the second feature, or may comprise that the first feature does not directly contact with the second feature, rather than contact through another feature among them. Moreover, the first feature being "above", "over" and "on" the second feature may comprise that the first feature is directly above and obliquely above the second feature, or simply means that the level of the first feature is higher than that of the second feature. The first feature being "below", "under" and "underneath" the second feature comprises that the first feature is directly below and obliquely below the second feature, or simply means that the level of the first feature is smaller than that of the second feature.

As shown in Figs. 2-6, an embodiment of the present disclosure provides an interactive white board, and the interactive white board comprises a display screen 1, a metal backboard 2, an antenna assembly 3 and a mainboard (not shown).

The interactive white board in the embodiment of the present disclosure may be an electronic device with functions such as writing, annotation, painting, multimedia entertainment, and network conference. The interactive white board can integrate many technologies such as human-computer interaction, panel display, multimedia information processing and network transmission, and can be used in scenes such as office, teaching, and interactive presentation of pictures and texts.

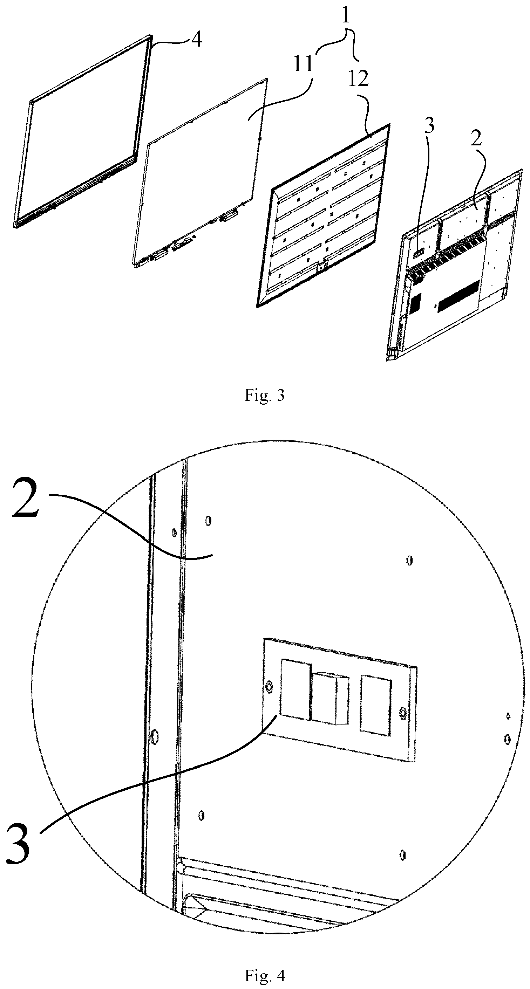

As shown in Fig. 3, the interactive white board can further include a frame 4. The display screen 1 is embedded in the frame 4, and the metal backboard 2 is located on a back surface of the display screen 1. After the metal backboard 2 is mechanically connected with the frame 4, the display screen 1, the frame 4 and the metal backboard 2 are connected integrally. Obviously, the interactive white board may further include components such as a speaker and a heat sink.

In this embodiment of the present disclosure, the display screen 1 may be a touch display screen, that is, the display screen 1 may include a backlight layer 12, a display layer 11 and a touch layer (not shown). The backlight layer 12 may a physical layer providing a light source required for display. The display layer 11 may be a liquid crystal display layer. The touch layer may be a capacitive touch layer, an infrared touch layer, or the like.

The metal backboard 2 may be a component located on the back surface of the display screen 1 for supporting and protecting the display screen 1. In an optional embodiment, the metal backboard 2 can have a specific structure after being cut and stamped from a steel plate, so that the metal backboard 2 can be connected with the frame 4 and a certain space is provided between the metal backboard 2 and the display screen 1 so as to accommodate components such as speakers and heat sinks.

The antenna assembly 3 can be an assembly for radiating and receiving wireless signals. The mainboard is provided on a surface of the metal backboard 2 facing away from the display screen 1. The antenna assembly 3 is electrically connected with the mainboard. Exemplarily, the antenna assembly 3 can be electrically connected with the mainboard through a signal transmission line. In an optional embodiment, the antenna assembly 3 can be an antenna assembly with functions such as Wi-Fi, wireless access point, Bluetooth, etc. Preferably, the antenna assembly 3 can be a Wi-Fi antenna assembly, and a first radiation frequency band of the antenna assembly 3 is Wi-Fi 2.4G (2.4Ghz~2.5GHz) frequency band, a second radiation frequency band is Wi-Fi 5G frequency band, wherein 2.4G frequency band has strong anti-attenuation capability in indoor environment, good capability of penetrating walls, 5G (4.9GHz~5.9GHz) frequency band has a strong capability of anti-interference, and can provide a larger bandwidth, high throughput and high scalability.

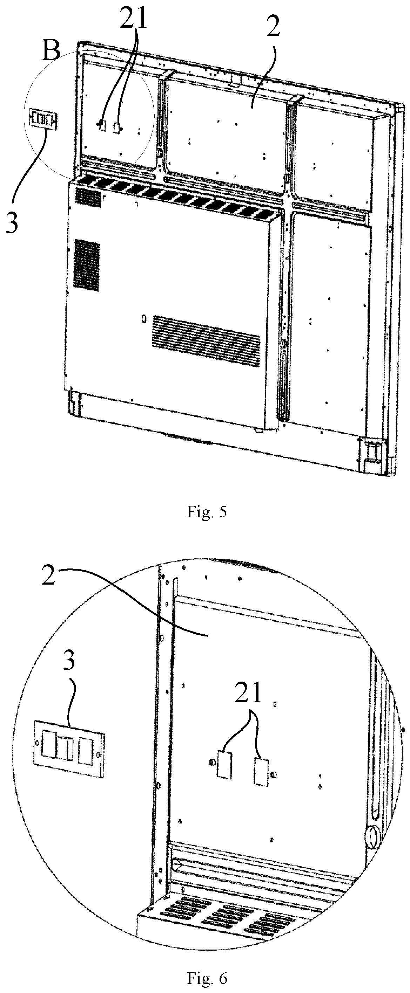

As shown in Figs. 5 and 6, in the embodiment of the present disclosure, the metal backboard 2 is located on the back surface of the display screen 1, and the metal backboard 2 is provided with through holes 21. The antenna assembly 3 is provided on a surface of the metal backboard 2 facing away from the display screen. 1, and is located in a display region of the display screen 1, and the antenna assembly 3 is disposed directly opposite to the through holes 21. It should be noted that the fact that the antenna assembly 3 being located in the display region of the display screen 1 may refer to that: the projection of the antenna assembly 3 on the display screen 1 is in the display region of the display screen 1. The through holes 21 may refer to round holes, square holes or other special-shaped holes in the metal backboard 2 penetrating the metal backboard 2, and the shape of the through holes 21 can be set according to the antenna assembly 3. The antenna assembly 3 being disposed directly opposite to the through holes 21 refers to that: antenna units on the antenna assembly 3 are directly opposite to the through holes 21, so that the wireless signal radiated by the antenna unit can pass through the through hole 21 and then penetrate the display screen 1 and radiate to the directly front of the display screen 1.

The interactive white board of embodiments of the present disclosure includes a display screen, a metal backboard, an antenna assembly, and a mainboard, wherein the metal backboard is located behind the display screen and is provided with through holes, the antenna assembly is provided on a surface of the metal backboard facing away from the display screen, and is located in the display region of the display screen, the antenna assembly is disposed directly opposite to the through holes, the mainboard is provided on the surface of the metal backboard facing away from the display screen, and the antenna assembly is electrically connected with the mainboard. In embodiments of the present disclosure, the antenna assembly is disposed in the display region of the display screen, and can radiate signals forward through the through holes on the metal backboard and the display screen, without occupying a frame region of the interactive white board, such that the frame can be made narrower, which improves a screen-to-body ratio of the interactive white board and even realizes a full-screen design.

Furthermore, the antenna assembly is located in the display region of the display screen and does not occupy a frame region of the interactive white board. Therefore, the interactive white board can use a metal frame, so that through the metal frame, the interactive white board can not only improve the structural strength, but also have a good appearance.

Furthermore, the interactive white board does not need to provide an antenna on the frame, which avoids the problem of signal attenuation caused by the antenna located in the frame being blocked by the wall due to the interactive white board being embedded in the wall. The antenna assembly in the interactive white board in this embodiment is located in the display region of the display screen, so when the interactive white board is embedded in the wall, the antenna assembly is outside a shielding range of the wall, thus the radiation capability of the antenna assembly is not affected.

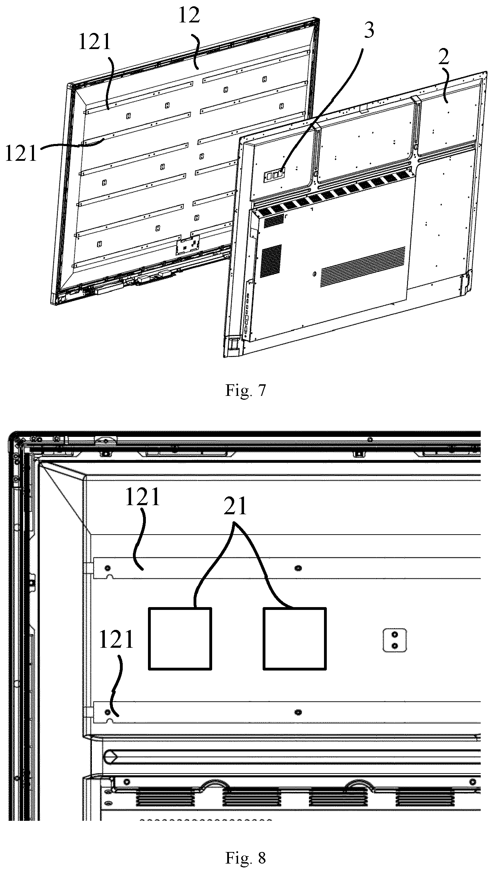

As shown in Figs. 3, 7 and 8, the backlight layer 12 of the display screen 1 according to the embodiment of the present disclosure may include a plurality of light bars 121 arranged in a regular array, and the light bars 121 emit light after being powered on so as to provide the display layer 11 with required backlight. In one example, the light bar 121 may be a light bar composed of a plurality of LED lights, preferably, the light bar 121 may be composed of a plurality of light emitting diodes. As shown in Figs. 7 and 8, in one example, the plurality of light bars 121 is arranged at intervals in a horizontal direction. Obviously, the plurality of light bars 121 may also be arranged at intervals in a vertical direction, or arranged in a grid shape in the horizontal and vertical directions. As shown in Fig. 8 , taking arrangement of the light bars 121 at intervals in the horizontal direction as an example, a projection of the through holes 21 of the metal backboard 2 in the backlight layer 12 is between the two light bars 121, so that wireless signals radiated by the antenna assembly 3 can propagate between the two light bars 121 towards the display layer 11 of the display screen 1, which can prevent the light bars 121 from interfering with the wireless signals radiated by the antenna assembly 3 and improve the anti-interference capability of the antenna assembly 3.

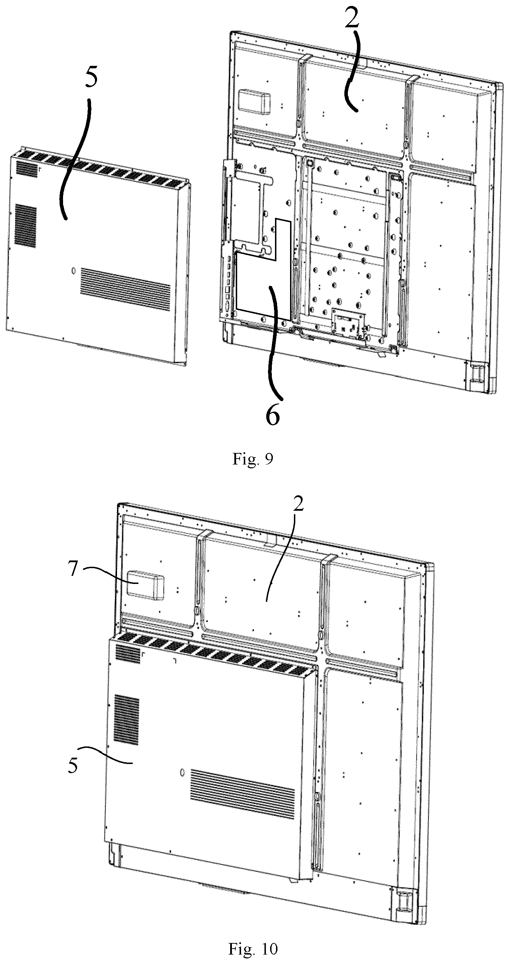

As shown in Figs. 9 and 10, in an optional embodiment of the present disclosure, the interactive white board further includes a metal back cover 5, the mainboard 6 is disposed on a surface of the metal backboard 2 facing away from the display screen 1, and the metal back cover 5 is connected with the metal backboard 2 and covers the mainboard 6. Specifically, the metal back cover 5 is connected with the metal backboard 2 to form an accommodating cavity, and the mainboard 6 is located in the accommodating cavity and is mechanically connected with the metal backboard 2. In one example, the mainboard 6 and the metal backboard 2 are connected by screws. On the one hand, the mainboard 6 is provided on a surface of the metal backboard 2 facing away from the display screen 1, and the mainboard 6 and the display screen 1 are isolated by the metal backboard 2, which can prevent the mainboard 6 and the display screen 1 from interfering with each other. On the other hand, the metal back cover 5 covers the mainboard 6, which can not only protect the mainboard 6 from physical impact, dust and water, but also prevent the mainboard 6 from being subjected to electromagnetic interference.

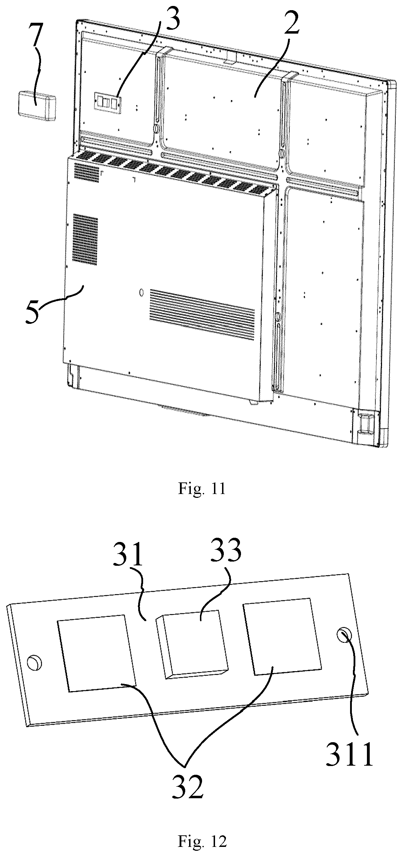

As shown in Figs. 10 and 11, in an optional embodiment, when the interactive white board is provided with the metal back cover 5, the antenna assembly 3 is located outside a region covered by the metal back cover 5. It should be noted that the antenna assembly 3 may be located at any position outside the region covered by the metal back cover 5, and the position of the antenna assembly 3 on the metal backboard 2 is not limited in the embodiment of the present disclosure. The antenna assembly 3 is disposed outside the region covered by the metal back cover 5, and the motherboard 6 and the antenna assembly 3 are isolated by the metal back cover 5, which can avoid mutual electromagnetic interference between the motherboard 6 and the antenna assembly 3. Therefore, the antenna assembly 3 has good anti-interference capability, the radiation performance of the antenna assembly 3 is improved.

As shown in Figs. 10 and 11, when the antenna assembly 3 is disposed outside the region covered by the metal back cover 5, the interactive white board may further include a decorative piece 7, and the decorative piece 7 is connected with the metal backboard 2 and covers the antenna assembly 3. In one example, the decorative piece 7 can be detachably connected with the metal backboard 2, for example, the decorative piece 7 can be mechanically connected with the metal backboard 2 by means of snaps, screws, etc., so as to cover the antenna assembly 3, which can avoid affecting the overall appearance of the interactive white board due to the exposure of the antenna assembly 3, and can also play a role of protecting the antenna assembly 3 from physical impact, preventing dust and water, etc.

In a preferred embodiment, the material of the decorative piece 7 can be metal, for example, the material of the decorative piece 7 can be aluminum, copper, iron, etc., so that the decorative piece 7 made of metal can be used as a shielding cover to prevent the antenna assembly 3 from electromagnetic interference in the direction behind the metal backboard 2, and improve the anti-interference performance of the antenna assembly 3.

Obviously, the material of the decorative piece 7 can also be a non-metallic material. In an optional embodiment, a region beyond the region covered by the antenna assembly 3 on the metal backboard 2 is provided with a spray-painting layer. More preferably, the exposed surface of the decorative piece 7 is further provided with a spray-painting layer with the same color. On the one hand, since the material of the metal backboard 2 is metal, the arrangement of the spray-painting layer can prevent the metal backboard 2 from being rusted due to chemical reactions such as oxidation. On the other hand, metal exposure can be avoided by the spray-painting layer, and the interactive white board has a good appearance.

As shown in Fig. 2, in an optional embodiment of the present disclosure, the antenna assembly 3 may also be located in the region covered by the metal back cover 5. Specifically, an accommodation cavity is formed between the metal back cover 5 and the metal backboard 2, the antenna assembly 3 is disposed in the accommodating cavity and is connected with the metal backboard 2. And the position of the metal backboard 2 directly opposite to the antenna assembly 3 is also provided with through holes, which is the same as that the antenna assembly 3 is disposed outside the region covered by the metal back cover 5. In the embodiment of the present disclosure, the antenna assembly 3 is disposed in the region covered by the metal back cover 5, and the antenna assembly 3 does not expose outside an outer surface of the interactive white board, which does not need additional decorative piece 7 to cover the exposed antenna assembly 3.

As shown in Fig. 2, in the interactive white board of this embodiment of the present disclosure, the number of antenna assemblies 3 may be two or more, for example, may include a first antenna assembly and a second antenna assembly, wherein the first antenna assembly is located in the region covered by the metal back cover 5, and the second antenna assembly is located outside the region covered by the metal back cover 5. Exemplarily, the first antenna assembly may be an AP (Access Point) antenna assembly, and the second antenna assembly may be a Wi-Fi antenna assembly. Therein, the AP (Access Point) antenna assembly is a wireless switch used in wireless network, and is also the core of the wireless network. The wireless AP is an access point for the interactive white board to enter the wired network, mainly used in broadband homes, inside buildings and inside the campus. And wireless APs can cover a radiation range of tens of meters to hundreds of meters. In the interactive white board, the AP antenna assembly is mainly used to communicate with wireless devices such as a screen transmitter that is in front of the interactive white board, and may just have the function of forward radiation.

In this embodiment of the present disclosure, the first antenna assembly is disposed in the region covered by the metal back cover 5, and the second antenna assembly is disposed outside the region covered by the metal back cover 5. The two antenna assemblies are isolated by metal back cover 5, so the isolation of the two antenna assembly is good, and the wireless signals do not interfere with each other.

Obviously, in practical applications, the two antenna assemblies 3 can also be disposed outside the region covered by the metal back cover 5, or the two antenna assemblies 3 can be arranged in the region covered by the metal back cover 5. There is no limitation on whether the antenna assembly 3 is disposed in the metal back cover 5 or outside the metal back cover 5.

Thereinafter, the connection mode of the antenna assembly 3 and the metal backboard 2 is exemplified with reference to the accompanying drawings.

In an example of the present disclosure, as shown in Fig. 12, the antenna assembly 3 includes a dielectric substrate 31 and antenna units 32 disposed on the dielectric substrate 31. The antenna assembly 3 is connected with the metal backboard 2 through the dielectric substrate 31, and the antenna units 32 are arranged directly opposite to the through holes 21. Specifically, the dielectric substrate 31 may be a PCB substrate or other substrates, and the dielectric substrate 31 and the metal backboard 2 are detachably connected. For example, the dielectric substrate 31 and the metal backboard 2 can be mechanically connected by means of snap fitting, screw locking, etc., or bonded by double-sided tape. The antenna assembly 3 in the embodiment of the present disclosure is detachably connected with the metal backboard 2, which can facilitate disassembly of the antenna assembly 3, and facilitate maintenance and replacement of the antenna assembly 3 of the interactive white board.

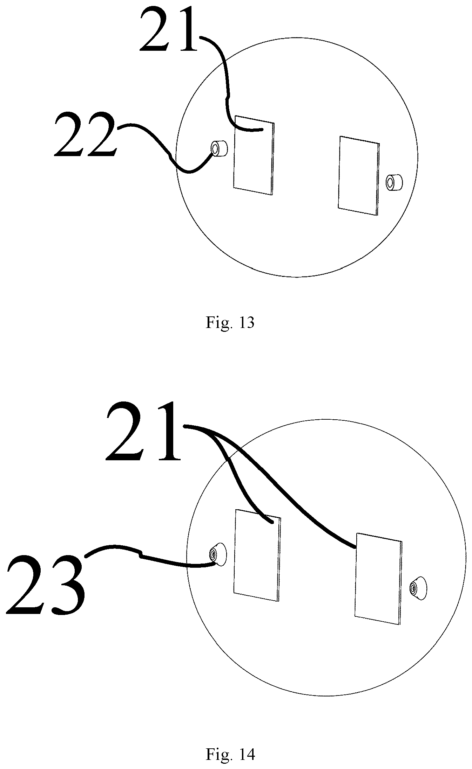

As shown in Figs. 12 and 13, in an example of the present disclosure, the dielectric substrate 31 is provided with lock holes 311. The metal backboard 2 is provided with extruded holes 22 matching with the lock holes 311. The extruded hole 22 is provided with internal threads. The extruded hole 22 is inserted into the lock holes 311 so as to connect the dielectric substrate 31 and the metal backboard 2 by screws. Specifically, the extruded hole 22 can be a cylindrical structure with a certain height formed on the metal backboard 2 by a stamping process, and threads can be formed by tapping inside the cylindrical structure. For example, the height of the extruded hole 22 is generally less than the thickness of the dielectric substrate 31, so that after the screw is locked into the lock hole, a nut of the screw can press against the dielectric substrate 31 so as to fix the dielectric substrate 31 on the metal backboard 2. In the embodiment of the present disclosure, by providing the extruded hole 22 on the metal backboard 2 to mechanically connect with the dielectric substrate 31, and inserting the extruded hole 22 into the lock hole 311 of the dielectric substrate 31, the dielectric substrate 31 can be easily positioned, and thus the antenna assembly 3 can be quickly assembled on the interactive white board.

Furthermore, a conductor is further provided between the dielectric substrate 31 and the metal backboard 2. Optionally, the conductor may be an elastic conductor, such as one of conductive foam, conductive cloth, conductive paint, and metal dome. Taking the conductive foam as an example, a conductive foam can be provided between the dielectric substrate 31 and the metal backboard 2, and the conductive foam is around the dielectric substrate 31 so as to improve electrical connection performance between the metal backboard 2 and exposed copper surrounding a surface of the dielectric substrate 31 facing the metal backboard 2, which makes the antenna assembly 3 have good grounding performance and anti-interference performance.

As shown in Figs. 12 and 14, in another example of the present disclosure, a plurality of bulges 23 are provided on a surface of the metal backboard 2 facing away from the display screen 1. The bulges 23 are provided with internal threads, the dielectric substrate 31 is located on the bulge 23, and the dielectric substrate 31 and the bulge 23 are connected by screws, so as to realize the detachable connection between the antenna assembly 3 and the metal backboard 2. Furthermore, a conductor is disposed between the dielectric substrate 31 and the metal backboard 2, and the conductor is around the dielectric substrate 31. The bulge 23 in the embodiment of the present disclosure has a certain height, thus when the dielectric substrate 31 is disposed on the bulge 23, there is a certain distance between the dielectric substrate 31 and the metal backboard 2, so that the surface of the dielectric substrate 31 facing the metal backboard 2 can be provided with electronic components.

In order to improve the anti-interference capability of the antenna assembly 3, in the embodiments of the present disclosure, the shielding structure of the antenna assembly 3 will be described with reference to the accompanying drawings.

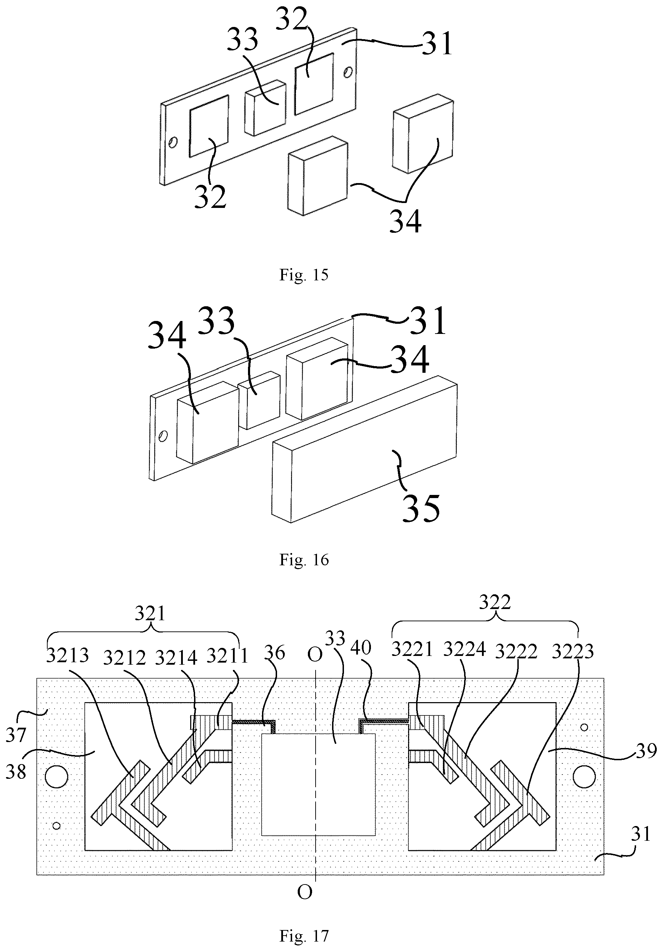

As shown in Fig. 16, in one example, the antenna assembly 3 further includes a first metal shielding cover 35. The first metal shielding cover 35 covers the dielectric substrate 31. Specifically, the first metal shielding cover 35 may be mechanically and electrically connected with the dielectric substrate 31. For example, the first metal shielding cover 35 and the dielectric substrate 31 are mechanically and electrically connected by means of soldering, metal clips, etc. The first metal shielding cover 35 can protect the entire antenna assembly 3 from electromagnetic interference, which improves the anti-interference capability of the antenna assembly 3.

In one example, when the antenna assembly 3 is disposed in the region covered by the metal back cover 5, a first metal shielding cover 35 needs to be added to the antenna assembly 3, so as to avoid electromagnetic interference caused by the mainboard 6 in the metal back cover 5 to the antenna assembly 3.

In another example, when the antenna assembly 3 is disposed outside the region covered by the metal back cover 5, since the mainboard 6 and the antenna assembly 3 have been isolated by the metal back cover 5, the first metal shield 35 may not be added to the antenna assembly 3. Or, a metal decorative piece 7 may be used as the shielding cover.

As shown in Figs. 15 and 16, in an optional embodiment of the present disclosure, the number of antenna units 32 on the antenna assembly 3 is two or more. The antenna assembly 3 may further include a second metal shielding cover 34. Each of the antenna units 32 is covered by a second metal shielding cover 34, that is, each antenna unit 32 is provided with a second metal shielding cover 34, so that the isolation among the antenna units 32 and the overall radiation performance of the antenna assembly 3 can be improved. More preferably, a distance from the antenna unit 32 to the bottom of the second metal shield 34 is an integer multiple of a quarter wavelength of the electromagnetic wave radiated by the antenna unit 32, so that the forward radiation capability of the antenna unit 32 can be improved, which increases the radiation distance of the antenna unit 32 .

Fig. 15 is a schematic diagram of antenna units of the antenna assembly 3 according to an embodiment of the present disclosure. In an optional embodiment of the present disclosure, a radio frequency chip 33 is further provided on the dielectric substrate 31 of the antenna assembly 3. The antenna unit 32 is electrically connected with the radio frequency chip 33 through a signal transmission line on the dielectric substrate 31. In an optional embodiment, the radio frequency chip 33 and the antenna unit 32 are located on the same surface of the dielectric substrate 31, so that the overall thickness of the antenna assembly 3 is smaller. In another optional embodiment, the radio frequency chip 33 and the antenna unit 32 are located on different surfaces of the dielectric substrate 31, so that two sides of the dielectric substrate 31 can be fully utilized and then the overall area of the dielectric substrate can be reduced.

As shown in Fig. 17, the antenna assembly 3 in this embodiment of the present disclosure may include a first antenna unit 321 and a second antenna unit 322. The first antenna unit 321 and the second antenna unit 322 are located on two sides of the radio frequency chip 33 respectively, and are electrically connected with the radio frequency chip through the first signal transmission line 36 and the second signal transmission line 40 respectively. Disposing the first antenna unit 321 and the second antenna unit 322 on two sides of the radio frequency chip 33 can increase the distance between the first antenna unit 321 and the second antenna unit 322, and increase the isolation between the first antenna unit 321 and the second antenna unit 322.

As shown in Fig. 17, the dielectric substrate 31 is provided with a first square clearance region 38 and a second square clearance region 39 on two sides of the radio frequency chip 33 and on a surface covered with copper 37. The first antenna unit 321 is located in the square clearance region 38, and the second antenna unit 322 is located in the second square clearance region 39.

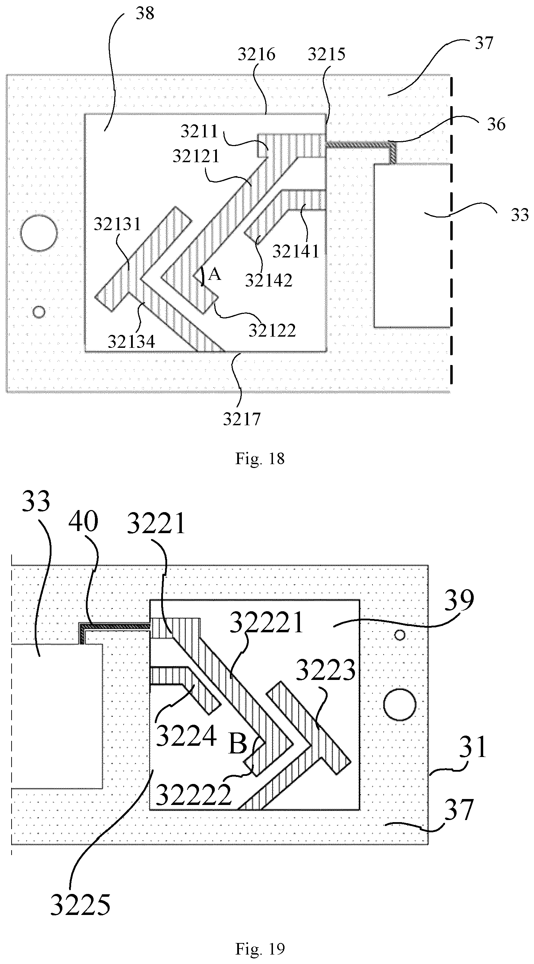

As shown in Figs. 17 and 18, the first antenna unit 321 includes a first feeder stub 3211, a first L-shaped stub 3212, a first T-shaped stub 3213, and a first ground stub 3214.

Therein, the first feeder stub 3211 extends from a first boundary 3215 into the first square clearance region 38 and is perpendicular to the first boundary 3215. A junction between the first feeder stub 3211 and the first boundary 3215 is connected with a first signal transmission line 36. The first boundary 3215 is a upright boundary close to the radio frequency chip 33.

The first L-shaped stub 3212, the first T-shaped stub 3213 and the first ground stub 3214 are located on a side of the first feeder stub 3211 away from a second boundary 3216. The second boundary 3216 is a boundary adjacent to and perpendicular to the first boundary 3215. The first L-shaped stub 3212 includes a first stub 32121 and a second stub 32122, the first stub 32121 is connected with the first feeder stub 3211, and a connection point is located between two ends of the first feeder stub 3211. The first stub 32121 and the first feeder stub 3211 form an obtuse angle, and a first right angle A formed by the first stub 32121 and the second stub 32122 faces the first boundary 3215.

The first T-shaped stub 3213 includes a third stub 32131 and a fourth stub 32132. The third stub 32131 is located on a side of the first stub 32121 away from the first boundary 3215, and is arranged parallel to and spaced apart from the first stub 32121. The fourth stub 32132 is located on the side of the second stub 32122 away from the first feeder stub 3211, and is arranged parallel to and spaced apart from the second stub 32122. The fourth stub 32132 extends to a third boundary 3217 so as to connect the surface covered with copper 37, and the third boundary 3217 is a boundary parallel to the second boundary 3216.

The first ground stub 3214 includes a fifth stub 32141 and a sixth stub 32142. The fifth stub 32141 extends from the first boundary 3215 into the first square clearance region 38 and is parallel to the first feeder stub 3211. The sixth stub 32142 is arranged parallel to and spaced apart from the first stub 32121.

As shown in Figs. 17 and 19, the second antenna unit 322 includes a second feeder stub 3221, a second L-shaped stub 3222, a second T-shaped stub 3223, and a second ground stub 3224.

Therein, the second feeder stub 3221 and the first feeder stub 3211 are arranged in a mirror image relative to a center line O-O of the radio frequency chip 33, and the second feeder stub 3221 is connected with the second signal transmission line 40. The second T-shaped stub 3223 and the first T-shaped stub 3213 are arranged in a mirror image relative to the center line O-O of the radio frequency chip 33, and the second ground stub 3224 and the first ground stub 3214 are arranged in a mirror image relative to the center line O-O of the radio frequency chip 33.

The second L-shaped stub 3222 includes a seventh stub 32221 and an eighth stub 32222. The seventh stub 32221 is connected with the second feeder stub 3221, and a connection point is located at one end of the second feeder stub 3221 away from a fourth boundary 3225. The seventh stub 32221 and the second feeder stub 3221 form an obtuse angle, and a second right angle B formed by the seventh stub 32221 and the eighth stub 32222 faces the fourth boundary 3225. The fourth boundary 3225 is a upright boundary of the radio frequency chip 33 close to the second square clearance region 39.

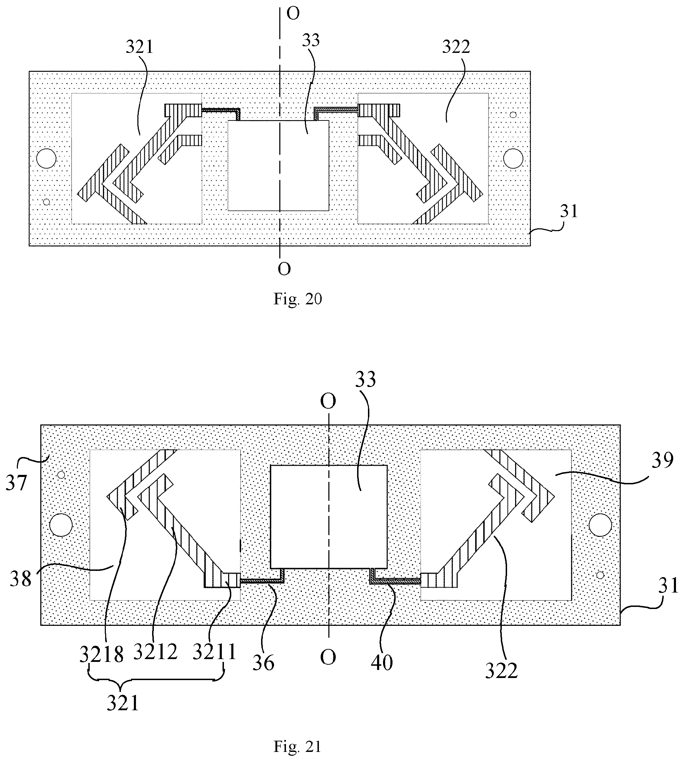

As shown in Fig. 20, in another optional embodiment of the present disclosure, the structure of the second antenna unit 322 may be the same as that of the first antenna unit 321, and the first antenna unit 321 and the second antenna unit 322 are arranged in a mirror image relative to the center line O-O of the radio frequency the chip 33.

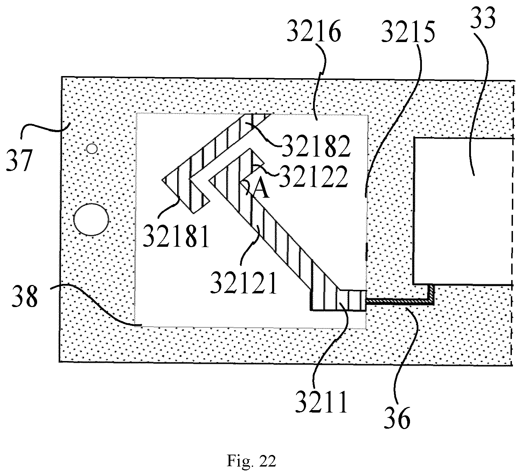

Figs. 21 and 22 are schematic diagrams of an antenna assembly 3 according to another embodiment of the present disclosure. As shown in Fig. 21, the antenna assembly 3 includes a first antenna unit 321 and a second antenna unit 322 disposed on the dielectric substrate 31. The first antenna unit 321 and the second antenna unit 322 are arranged in a mirror image relative to the center line O-O of the radio frequency chip 33.

Fig. 22 is a schematic diagram of structure of the first antenna unit 321. The first antenna unit 321 includes a first feeder stub 3211, a first L-shaped stub 3212 and an L-shaped ground stub 3218.

The first feeder stub 3211 extends from the first boundary 3215 into the first square clearance region 38, and is perpendicular to the first boundary 3215. The junction of the first feeder stub 3211 and the first boundary 3215 is connected with the first signal transmission line 36. The first boundary 3215 is a upright boundary close to the radio frequency chip 33.

The first L-shaped stub 3212 and the L-shaped ground stub 3218 are located on a side of the first feeder stub 3211 close to the second boundary 3216. The first L-shaped stub 3212 includes a first stub 32121 and a second stub 32122. The first stub 32121 is connected with the first feeder stub 3211, and a connection point is located at an end of the first feeder stub 3211 away from the first boundary 3215. The first stub 32121 and the first feeder stub 3211 form an obtuse angle, and the first right angle A formed by the first stub 32121 and the second stub 32122 faces a first boundary 3215. The second border 3216 is a boundary adjacent to and perpendicular to the first boundary 3215.

The L-shaped ground stub 3218 includes a ninth stub 32181 and a tenth stub 32182. The ninth stub 32181 is located on a side of the first stub 32121 away from the first boundary 3215, and is arranged parallel to and spaced apart from the first stub 32121. The tenth stub 32182 is located on a side of the second stub 32122 away from the first feeder stub 3211, and is parallel to and spaced apart from the second stub 32122. The tenth stub 32182 extends to the second boundary 3216 so as to connect the surface covered with copper 37.

The structures of the first antenna unit 321 and the second antenna unit 322 in the antenna assembly 3 of the embodiment of the present disclosure have been described above with reference to Figs. 17 to 21. In practical applications, those skilled in the art may further arrange antenna units with other structures. In addition, the structures of the first antenna unit 321 and the second antenna unit 322 may be the same or different, and the structures of the first antenna unit 321 and the second antenna unit 322 are not limited in this embodiment of the present disclosure.

## Claims

1. An interactive white board, **characterized by** comprising:
a display screen (1);
a metal backboard (2), wherein the metal backboard (2) is located on a back surface of the display screen (1), and the metal backboard (2) is provided with through holes (21);
an antenna assembly (3), wherein the antenna assembly (3) is disposed on a surface of the metal backboard (2) facing away from the display screen (1), and is located in a display region of the display screen (1), and the antenna assembly (3) is disposed directly opposite to the through holes (21); and
a mainboard (6), wherein the mainboard (6) is provided on the surface of the metal backboard (2) facing away from the display screen (1), and the mainboard (6) is electrically connected with the antenna assembly (3).

2. The interactive white board according to claim 1, **characterized in that** the display screen (1) includes a backlight layer (12), the backlight layer (12) includes a plurality of light bars (121) arranged in an array, and a projection of the through holes (21)in the backlight layer (12) is between the two light bars (121).

3. The interactive white board according to claim 1, **characterized in that** the antenna assembly (3) includes a dielectric substrate (31) and an antenna unit (32) disposed on the dielectric substrate (31), the antenna assembly (3) is connected with the metal backboard (2) through the dielectric substrate (31), and the antenna unit (32) is arranged directly opposite to the through holes (21).

4. The interactive white board according to claim 3, **characterized in that** the dielectric substrate (31) and the metal backboard (2) are detachably connected.

5. The interactive white board according to claim 3, **characterized in that** a plurality of bulges (23) are provided on the surface of the metal backboard (2) facing away from the display screen (1), the bulges (23) are provided with internal threads, the dielectric substrate (31) is located on the bulges (23), and the dielectric substrate (31) and the bulges (23) are connected by screws; and
wherein a conductor is provided between the dielectric substrate (31) and the metal backboard (2), and the conductor is around the dielectric substrate (31).

6. The interactive white board according to claim 3, **characterized in that** the dielectric substrate (31) is provided with lock holes (311), the metal backboard (2) is provided with extruded holes (22) matching with the lock holes (311), the extruded holes (22) are provided with internal threads, and the extruded holes (22) are inserted into the lock holes (311) so as to connect the dielectric substrate (31) and the metal backboard (2) by screws; and
wherein a conductor is provided between the dielectric substrate (31) and the metal backboard (2), and the conductor is around the dielectric substrate (31).

7. The interactive white board according to claim 3, **characterized in that** the antenna assembly (3) further includes a first metal shielding cover (35), and the first metal shielding cover (35) covers the dielectric substrate (31); and
wherein the number of antenna units (32) on the antenna assembly (3) is two or more, the antenna assembly (3) further includes two or more second metal shielding covers (34), and each second metal shielding cover (34) covers one antenna unit (32).

8. The interactive white board according to claim 3, **characterized in that** the antenna assembly (3) further includes a radio frequency chip (33) disposed on the dielectric substrate (31), and the antenna unit (32) is connected with the radio frequency chip (33); and
wherein the radio frequency chip (33) and the antenna unit (32) are located on the same surface of the dielectric substrate (31); and
wherein the antenna unit (32) includes a first antenna unit (321) and a second antenna unit (322), and the first antenna unit (321) and the second antenna unit (322) are located on two sides of the radio frequency chip (33) respectively.

9. The interactive white board according to claim 8, **characterized in that** the dielectric substrate (31) is provided with a first square clearance region (38) and a second square clearance region (39) located on two sides of the radio frequency chip (33) and on a surface covered with copper (37), the first antenna unit (321) is located in the square clearance region, and the second antenna unit (322) is located in the second square clearance region (39); and
wherein the first antenna unit (321) includes a first feeder stub (3211), a first L-shaped stub (3212), a first T-shaped stub (3213), and a first ground stub (3214);
the first feeder stub (3211) extends from a first boundary (3215) into the first square clearance region (38) and
is perpendicular to the first boundary (3215), a junction between the first feeder stub (3211) and the first boundary (3215) is connected with a first signal transmission line (36), and the first boundary (3215) is a upright boundary close to the radio frequency chip (33);
the first L-shaped stub (3212), the first T-shaped stub (3213) and the first ground stub (3214) are located on a side of the first feeder stub (3211) away from the second boundary (3216), the second boundary (3216) is a boundary adjacent to and perpendicular to the first boundary (3215), the first L-shaped stub (3212) includes a first stub (32121) and a second stub (32122), the first stub (32121) is connected with the first feeder stub (3211), and a connection point is located between two ends of the first feeder stub (3211), the first stub (32121) and the first feeder stub (3211) form an obtuse angle, and a first right angle formed by the first stub (32121) and the second stub (32122) faces the first boundary (3215);
the first T-shaped stub (3213) includes a third stub (32131) and a fourth stub (32132), the third stub (32131) is located on a side of the first stub (32121) away from the first boundary (3215), and is arranged parallel to and spaced apart from the first stub (32121), the fourth stub (32132) is located on a side of the second stub (32122) away from the first feeder stub (3211), and is arranged parallel to and spaced apart from the second stub (32122), the fourth stub (32132) extends to a third boundary (3217) so as to connect the surface covered with copper (37), and the third boundary (3217) is a boundary parallel to a second boundary (3216);
the first ground stub (3214) includes a fifth stub (32141) and a sixth stub (32142), the fifth stub (32141) extends from the first boundary (3215) into the first square clearance region (38) and is parallel to the first feeder stub (3211), and the sixth stub (32142) is arranged parallel to and spaced apart from the first stub (32121).

10. The interactive white board according to claim 9, **characterized in that** the second antenna unit (322) includes a second feeder stub (3221), a second L-shaped stub, a second T-shaped stub, and a second ground stub (3224);
the second feeder stub (3221) and the first feeder stub (3211) are arranged in a mirror image with the radio frequency chip (33) as a center, the second T-shaped stub and the first T-shaped stub (3213) are arranged in a mirror image with the radio frequency chip (33) as a center, and the second ground stub (3224) and the first ground stub (3214) are arranged in a mirror image with the radio frequency chip (33) as a center;
the second L-shaped stub (3222) includes a seventh stub (32221) and an eighth stub (32222), the seventh stub (32221) is connected with the second feeder stub (3221), and a connection point is located at one end of the second feeder stub (3221) away from a fourth boundary (3225), the seventh stub (32221) and the second feeder stub (3221) form an obtuse angle, a second right angle formed by the seventh stub (32221) and the eighth stub (32222) faces the fourth boundary (3225), and the fourth boundary (3225) is a upright boundary in the second square clearance region (39) close to the radio frequency chip (33).

11. The interactive white board according to claim 8, **characterized in that** the dielectric substrate (31) is provided with a first square clearance region (38) and a second square clearance region (39) located on two sides of the radio frequency chip (33) and on a surface covered with copper (37), the first antenna unit (321) is located in the square clearance region, and the second antenna unit (322) is located in the second square clearance region (39); and wherein the first antenna unit (321) includes a first feeder stub (3211), a first L-shaped stub (3212), and an L-shaped ground stub (3218);
the first feeder stub (3211) extends from a first boundary (3215) into the first square clearance region (38), and is perpendicular to the first boundary (3215), a junction between the first feeder stub (3211) and the first boundary (3215) is connected with a first signal transmission line (36), the first boundary (3215) is a upright boundary close to the radio frequency chip (33), and a second boundary (3216) is a boundary adjacent to and perpendicular to the first boundary (3215);
the first L-shaped stub (3212) and the L-shaped ground stub (3218) are located on a side of the first feeder stub (3211) close to the second boundary (3216), the first L-shaped stub (3212) includes a first stub (32121) and a second stub (32122), the first stub is connected with the first feeder stub (3211), and a connection point is located at an end of the first feeder stub (3211) away from the first boundary (3215), the first stub (32121) and the first feeder stub (3211) form an obtuse angle, and a first right angle formed by the first stub (32121) and the second stub (32122) faces the first boundary (3215);
the L-shaped ground stub includes a ninth stub (32181) and a tenth stub (32182), the ninth stub (32181) is located on a side of the first stub (32121) away from the first boundary (3215), and is arranged parallel to and spaced apart from the first stub (32121), the tenth stub (32182) is located on a side of the second stub (32122) away from the first feeder stub (3211), and is parallel to and spaced apart from the second stub (32122), and the tenth stub( 32182) extends to the second boundary (3216) so as to connect the surface covered with copper (37).

12. The interactive white board according to claim 8, **characterized in that** the first antenna unit (321) and the second antenna unit are Wi-Fi antenna units (32); or
wherein the first radiation frequency bands of the first antenna unit (321) and the second antenna unit (322) are Wi-Fi 2.4G frequency bands, second radiation frequency bands of the first antenna unit (321) and the second antenna unit (322) are Wi-Fi 5G frequency bands.

13. The interactive white board according to any one of claims 1-7, **characterized by** further comprising a decorative piece (7), wherein the decorative piece (7) is connected with the metal backboard (2) and covers the antenna assembly (3); and
wherein the decorative piece (7) is made of metal.

14. The interactive white board according to any one of claims 1-7, **characterized by** further comprising a metal back cover (5), wherein the metal back cover (5) is connected with the metal backboard (2) and covers the mainboard (6).

15. The interactive white board according to claim 14, **characterized in that** the antenna assembly (3) is located outside a region covered by the metal back cover (5); or
wherein the antenna assembly (3) is located in a region covered by the metal back cover (5); or wherein the antenna assembly (3) includes a first antenna assembly (3) and a second antenna assembly (3), the first antenna assembly (3) is located in a region covered by the metal back cover (5), and the second antenna assembly (3) is located outside the region covered by the metal back cover (5),
and the first antenna assembly (3) is an Access Point, AP, antenna assembly (3), and the second antenna assembly (3) is a Wi-Fi antenna assembly (3).

## Patentansprüche

1. Interaktives Whiteboard, **dadurch gekennzeichnet, dass** es umfasst:
einen Anzeigebildschirm (1);
eine Metallrückwand (2), wobei die Metallrückwand (2) auf einer Rückseite des Anzeigebildschirms (1) angeordnet ist und die Metallrückwand (2) mit Durchgangslöchern (21) ausgestattet ist;
eine Antennenbaugruppe (3), wobei die Antennenbaugruppe (3) auf einer vom Anzeigebildschirm (1) abgewandten Fläche der Metallrückwand (2) angeordnet ist und sich in einem Anzeigebereich des Anzeigebildschirms (1) befindet und die Antennenbaugruppe (3) direkt gegenüber den Durchgangslöchern (21) angeordnet ist; und
eine Hauptplatine (6), wobei die Hauptplatine (6) auf der dem Anzeigebildschirm (1) abgewandten Fläche der Metallrückwand (2) angeordnet ist und die Hauptplatine (6) elektrisch mit der Antennenbaugruppe (3) verbunden ist.

2. Interaktives Whiteboard nach Anspruch 1, **dadurch gekennzeichnet, dass** der Anzeigebildschirm (1) eine Hintergrundbeleuchtungs-Schicht (12) umfasst, die Hintergrundbeleuchtungs-Schicht (12) eine Vielzahl von in einer Gruppe angeordneten Lichtbalken (121) umfasst und eine Projektion der Durchgangslöcher (21) in der Hintergrundbeleuchtungs-Schicht (12) zwischen den zwei Lichtbalken (121) liegt.

3. Interaktives Whiteboard nach Anspruch 1, **dadurch gekennzeichnet, dass** die Antennenbaugruppe (3) ein dielektrisches Substrat (31) und eine auf dem dielektrischen Substrat (31) angeordnete Antenneneinheit (32) umfasst, wobei die Antennenbaugruppe (3) durch das dielektrische Substrat (31) mit der Metallrückwand (2) verbunden ist und die Antenneneinheit (32) direkt gegenüber den Durchgangslöchern (21) angeordnet ist.

4. Interaktives Whiteboard nach Anspruch 3, **dadurch gekennzeichnet, dass** das dielektrische Substrat (31) und die Metallrückwand (2) abnehmbar verbunden sind.

5. Interaktives Whiteboard nach Anspruch 3, **dadurch gekennzeichnet, dass** eine Vielzahl von Ausbuchtungen (23) auf der dem Anzeigebildschirm (1) abgewandten Fläche der Metallrückwand (2) angeordnet sind, die Ausbuchtungen (23) mit Innengewinden ausgestattet sind, das dielektrische Substrat (31) auf den Ausbuchtungen (23) angeordnet ist und das dielektrische Substrat (31) und die Ausbuchtungen (23) durch Schrauben verbunden sind; und
wobei ein Leiter zwischen dem dielektrischen Substrat (31) und der Metallrückwand (2) angeordnet ist und der Leiter um das dielektrische Substrat (31) herum verläuft.

6. Interaktives Whiteboard nach Anspruch 3, **dadurch gekennzeichnet, dass** das dielektrische Substrat (31) mit Verriegelungslöchern (311) ausgestattet ist, die Metallrückwand (2) mit extrudierten Löchern (22) ausgestattet ist, die mit den Verriegelungslöchern (311) zusammenpassen, die extrudierten Löcher (22) mit Innengewinden ausgestattet sind und die extrudierten Löcher (22) in die Verriegelungslöcher (311) eingesetzt sind, um das dielektrische Substrat (31) und die Metallrückwand (2) durch Schrauben zu verbinden; und
wobei ein Leiter zwischen dem dielektrischen Substrat (31) und der Metallrückwand (2) angeordnet ist und der Leiter um das dielektrische Substrat (31) herum verläuft.

7. Interaktives Whiteboard nach Anspruch 3, **dadurch gekennzeichnet, dass** die Antennenbaugruppe (3) ferner eine erste Metallabschirmungsabdeckung (35) umfasst und dass die erste Metallabschirmungsabdeckung (35) das dielektrische Substrat (31) abdeckt; und
wobei die Zahl von Antenneneinheiten (32) auf der Antennenbaugruppe (3) zwei oder mehr beträgt, die Antennenbaugruppe (3) ferner zwei oder mehr zweite Metallabschirmungsabdeckungen (34) umfasst und jede zweite Metallabschirmungsabdeckung (34) eine Antenneneinheit (32) abdeckt.

8. Interaktives Whiteboard nach Anspruch 3, **dadurch gekennzeichnet, dass** die Antennenbaugruppe (3) ferner einen auf dem dielektrischen Substrat (31) angeordneten Hochfrequenzchip (33) umfasst und die Antenneneinheit (32) mit dem Hochfrequenzchip (33) verbunden ist; und
wobei der Hochfrequenzchip (33) und die Antenneneinheit (32) auf der gleichen Fläche des dielektrischen Substrats (31) angeordnet sind; und
wobei die Antenneneinheit (32) eine erste Antenneneinheit (321) und eine zweite Antenneneinheit (322) umfasst, und die erste Antenneneinheit (321) und die zweite Antenneneinheit (322) jeweils auf zwei Seiten des Hochfrequenzchips (33) angeordnet sind.

9. Interaktives Whiteboard nach Anspruch 8, **dadurch gekennzeichnet, dass** das dielektrische Substrat (31) mit einem ersten quadratischen Zwischenraumbereich (38) und einem zweiten quadratischen Zwischenraumbereich (39) ausgestattet ist, angeordnet auf zwei Seiten des Hochfrequenzchips (33) und auf einer mit Kupfer (37) bedeckten Fläche, wobei die erste Antenneneinheit (321) im quadratischen Zwischenraumbereich und die zweite Antenneneinheit (322) im zweiten quadratischen Zwischenraumbereich (39) angeordnet ist; und
wobei die erste Antenneneinheit (321) eine erste Zuführungsstichleitung (3211), eine erste L-förmige Stichleitung (3212), eine erste T-förmige Stichleitung (3213) und eine erste Massestichleitung (3214) umfasst;
sich die erste Zuführungsstichleitung (3211) von einer ersten Grenze (3215) in den ersten quadratischen Zwischenraumbereich (38) erstreckt und senkrecht zur ersten Grenze (3215) ist, eine Verbindung zwischen der ersten Zuführungsstichleitung (3211) und der ersten Grenze (3215) mit einer ersten Signalsendeleitung (36) verbunden ist und die erste Grenze (3215) eine senkrechte Grenze nahe dem Hochfrequenzchip (33) ist; die erste L-förmige Stichleitung (3212), die erste T-förmige Stichleitung (3213) und die erste Massestichleitung (3214) auf einer von der zweiten Grenze (3216) entfernten Seite der ersten Zuführungsstichleitung (3211) angeordnet sind, die zweite Grenze (3216) eine an die erste Grenze (3215) angrenzende und zu dieser senkrechte Grenze ist, die erste L-förmige Stichleitung (3212) eine erste Stichleitung (32121) und eine zweite Stichleitung (32122) umfasst, die erste Stichleitung (32121) mit der ersten Zuführungsstichleitung (3211) verbunden ist und ein Verbindungspunkt zwischen zwei Enden der ersten Zuführungsstichleitung (3211) angeordnet ist, die erste Stichleitung (32121) und die erste Zuführungsstichleitung (3211) einen stumpfen Winkel bilden und ein erster rechter Winkel, der durch die erste Stichleitung (32121) und die zweite Stichleitung (32122) gebildet wird, zur ersten Grenze (3215) zeigt;
die erste T-förmige Stichleitung (3213) eine dritte Stichleitung (32131) und eine vierte Stichleitung (32132) umfasst, die dritte Stichleitung (32131) auf einer Seite der ersten Stichleitung (32121) entfernt von der ersten Grenze (3215) angeordnet ist und parallel zu und beabstandet von der ersten Stichleitung (32121) angeordnet ist, der vierte Stichleitung (32132) auf einer Seite der zweiten Stichleitung (32122) entfernt von der ersten Zuführungsstichleitung (3211) angeordnet ist und parallel zu und beabstandet von der zweiten Stichleitung (32122) angeordnet ist, sich die vierte Stichleitung (32132) zu einer dritten Grenze (3217) erstreckt, um die mit Kupfer (37) bedeckte Fläche zu verbinden, und die dritte Grenze (3217) eine Grenze parallel zu einer zweiten Grenze (3216) ist;
die erste Massestichleitung (3214) eine fünfte Stichleitung (32141) und eine sechste Stichleitung (32142) umfasst, sich die fünfte Stichleitung (32141) von der ersten Grenze (3215) in den ersten quadratischen Zwischenraumbereich (38) erstreckt und parallel zur ersten Zuführungsstichleitung (3211) ist und die sechste Stichleitung (32142) parallel und beabstandet von der ersten Stichleitung (32121) angeordnet ist.

10. Interaktives Whiteboard nach Anspruch 9, **dadurch gekennzeichnet, dass** die zweite Antenneneinheit (322) eine zweite Zuführungsstichleitung (3221), eine zweite L-förmige Stichleitung, eine zweite T-förmige Stichleitung und eine zweite Massestichleitung (3224) umfasst;
die zweite Zuführungsstichleitung (3221) und die erste Zuführungsstichleitung (3211) spiegelbildlich zum Hochfrequenzchip (33) als eine Mitte angeordnet sind, die zweite T-förmige Stichleitung und die erste T-förmige Stichleitung (3213) spiegelbildlich zum Hochfrequenzchip (33) als eine Mitte angeordnet sind und die zweite Massestichleitung (3224) und die erste Massestichleitung (3214) spiegelbildlich zum Hochfrequenzchip (33) als eine Mitte angeordnet sind;
die zweite L-förmige Stichleitung (3222) eine siebte Stichleitung (32221) und eine achte Stichleitung (32222) umfasst, die siebte Stichleitung (32221) mit der zweiten Zuführungsstichleitung (3221) verbunden ist und ein Verbindungspunkt an einem Ende der zweiten Zuführungsstichleitung (3221) entfernt von einer vierten Grenze (3225) angeordnet ist, die siebte Stichleitung (32221) und die zweite Zuführungsstichleitung (3221) einen stumpfen Winkel bilden, ein zweiter rechter Winkel, der durch die siebte Stichleitung (32221) und die achte Stichleitung (32222) gebildet wird, zur vierten Grenze (3225) zeigt und die vierte Grenze (3225) eine senkrechte Grenze im zweiten quadratischen Zwischenraumbereich (39) nahe dem Hochfrequenzchip (33) ist.

11. Interaktives Whiteboard nach Anspruch 8, **dadurch gekennzeichnet, dass** das dielektrische Substrat (31) mit einem ersten quadratischen Zwischenraumbereich (38) und einem zweiten quadratischen Zwischenraumbereich (39) ausgestattet ist, angeordnet auf zwei Seiten des Hochfrequenzchips (33) und auf einer mit Kupfer (37) bedeckten Fläche, wobei die erste Antenneneinheit (321) im quadratischen Zwischenraumbereich und die zweite Antenneneinheit (322) im zweiten quadratischen Zwischenraumbereich (39) angeordnet ist; und wobei die erste Antenneneinheit (321) eine erste Zuführungsstichleitung (3211), eine erste L-förmige Stichleitung (3212) und eine L-förmige Massestichleitung (3218) umfasst;
sich die erste Zuführungsstichleitung (3211) von einer ersten Grenze (3215) in den ersten quadratischen Zwischenraumbereich (38) erstreckt und senkrecht zur ersten Grenze (3215) ist, eine Verbindung zwischen der ersten Zuführungsstichleitung (3211) und der ersten Grenze (3215) mit einer ersten Signalsendeleitung (36) verbunden ist, die erste Grenze (3215) eine senkrechte Grenze nahe dem Hochfrequenzchip (33) ist und eine zweite Grenze (3216) eine Grenze angrenzend an und senkrecht zur ersten Grenze (3215) ist;
die erste L-förmige Stichleitung (3212) und die L-förmige Massestichleitung (3218) auf einer Seite der ersten Zuführungsstichleitung (3211) nahe der ersten Grenze (3216) angeordnet sind, die erste L-förmige Stichleitung (3212) eine erste Stichleitung (32121) und eine zweite Stichleitung (32122) umfasst, die erste Stichleitung mit der ersten Zuführungsstichleitung (3211) verbunden ist und ein Verbindungspunkt an einem Ende der ersten Zuführungsstichleitung (3211) entfernt von der ersten Grenze (3215) angeordnet ist, die erste Stichleitung (32121) und die erste Zuführungsstichleitung (3211) einen stumpfen Winkel bilden und ein erster rechter Winkel, gebildet durch die erste Stichleitung (32121) und die zweite Stichleitung (32122) zur ersten Grenze (3215) zeigt;
die L-förmige Massestichleitung eine neunte Stichleitung (32181) und eine zehnte Stichleitung (32182) umfasst, die neunte Stichleitung (32181) auf einer Seite der ersten Stichleitung (32121) entfernt von der ersten Grenze (3215) angeordnet ist und parallel zu und beabstandet von der ersten Stichleitung (32121) angeordnet ist, die zehnte Stichleitung (32182) auf einer Seite der zweiten Stichleitung (32122) entfernt von der ersten Zuführungsstichleitung (3211) angeordnet ist und parallel zu und beabstandet von der zweiten Stichleitung (32122) ist, und sich die zehnte Stichleitung (32182) zur zweiten Grenze (3216) erstreckt, um die mit Kupfer (37) bedeckte Fläche zu verbinden.

12. Interaktives Whiteboard nach Anspruch 8, **dadurch gekennzeichnet, dass** die erste Antenneneinheit (321) und die zweite Antenneneinheit Wi-Fi-Antenneneinheiten (32) sind; oder
wobei die ersten Strahlungsfrequenzbänder der ersten Antenneneinheit (321) und der zweiten Antenneneinheit (322) Wi-Fi-2.4G-Frequenzbänder sind und die zweiten Strahlungsfrequenzbänder der ersten Antenneneinheit (321) und der zweiten Antenneneinheit (322) Wi-Fi-5G-Frequenzbänder sind.

13. Interaktives Whiteboard nach einem der Ansprüche 1-7, **dadurch gekennzeichnet, dass** es ferner ein Dekorteil (7) umfasst, wobei das Dekorteil (7) mit der Metallrückwand (2) verbunden ist und die Antennenbaugruppe (3) abdeckt; und
wobei das Dekorteil (7) aus Metall besteht.

14. Interaktives Whiteboard nach einem der Ansprüche 1-7, **dadurch gekennzeichnet, dass** es ferner eine Metallrückseitenabdeckung (5) umfasst, wobei die Metallrückseitenabdeckung (5) mit der Metallrückwand (2) verbunden ist und die Hauptplatine (6) abdeckt.

15. Interaktives Whiteboard nach Anspruch 14, **dadurch gekennzeichnet, dass** die Antennenbaugruppe (3) außerhalb eines Bereichs angeordnet ist, der von der Metallrückseitenabdeckung (5) abgedeckt ist; oder
wobei die Antennenbaugruppe (3) in einem Bereich angeordnet ist, der durch die Metallrückseitenabdeckung (5) abgedeckt ist; oder wobei die Antennenbaugruppe (3) eine erste Antennenbaugruppe (3) und eine zweite Antennenbaugruppe (3) umfasst, wobei die erste Antennenbaugruppe (3) in einem Bereich angeordnet ist, der durch die Metallrückseitenabdeckung (5) abgedeckt ist, und die zweite Antennenbaugruppe (3) außerhalb des durch die Metallrückseitenabdeckung (5) abgedeckten Bereichs angeordnet ist,
und die erste Antennenbaugruppe (3) eine Access Point-(AP-)Antennenbaugruppe (3) ist und die zweite Antennenbaugruppe (3) eine Wi-Fi-Antennenbaugruppe (3) ist.

## Revendications

1. Tableau blanc interactif, **caractérisé en ce qu'**il comprend :
un écran d'affichage (1) ;
un tableau arrière métallique (2), dans lequel le tableau arrière métallique (2) est situé sur une surface arrière de l'écran d'affichage (1), et le tableau arrière métallique (2) est pourvu de trous traversants (21) ;
un ensemble d'antenne (3), dans lequel l'ensemble d'antenne (3) est disposé sur une surface du tableau arrière métallique (2) faisant face à l'opposé de l'écran d'affichage (1), et est situé dans une région d'affichage de l'écran d'affichage (1), et l'ensemble d'antenne (3) est disposé directement en vis-à-vis des trous traversants (21) ; et
une carte mère (6), dans lequel la carte mère (6) est agencée sur la surface du tableau arrière métallique (2) faisant face à l'opposé de l'écran d'affichage (1), et la carte mère (6) est connectée électriquement à l'ensemble d'antenne (3).

2. Tableau blanc interactif selon la revendication 1, **caractérisé en ce que** l'écran d'affichage (1) comporte une couche de rétroéclairage (12), la couche de rétroéclairage (12) comporte une pluralité de barres lumineuses (121) arrangées en réseau, et une projection des trous traversants (21) dans la couche de rétroéclairage (12) se situe entre les deux barres lumineuses (121).

3. Tableau blanc interactif selon la revendication 1, **caractérisé en ce que** l'ensemble d'antenne (3) comporte un substrat diélectrique (31) et une unité d'antenne (32) disposée sur le substrat diélectrique (31), l'ensemble d'antenne (3) est connecté au tableau arrière métallique (2) à travers le substrat diélectrique (31), et l'unité d'antenne (32) est arrangée directement en vis-à-vis des trous traversants (21).

4. Tableau blanc interactif selon la revendication 3, **caractérisé en ce que** le substrat diélectrique (31) et le tableau arrière métallique (2) sont connectés de manière séparable.

5. Tableau blanc interactif selon la revendication 3, **caractérisé en ce qu'**une pluralité de renflements (23) sont agencés sur la surface du tableau arrière métallique (2) faisant face à l'opposé de l'écran d'affichage (1), les renflements (23) sont pourvus de filetages internes, le substrat diélectrique (31) est situé sur les renflements (23), et le substrat diélectrique (31) et les renflements (23) sont connectés par des vis ; et dans lequel un conducteur est agencé entre le substrat diélectrique (31) et le tableau arrière métallique (2), et le conducteur se trouve autour du substrat diélectrique (31).

6. Tableau blanc interactif selon la revendication 3, **caractérisé en ce que** le substrat diélectrique (31) est pourvu de trous de verrouillage (311), le tableau arrière métallique (2) est pourvu de trous extrudés (22) correspondant aux trous de verrouillage (311), les trous extrudés (22) sont pourvus de filetages internes, et les trous extrudés (22) sont insérés dans les trous de verrouillage (311) de manière à connecter le substrat diélectrique (31) et le tableau arrière métallique (2) par des vis ; et
dans lequel un conducteur est agencé entre le substrat diélectrique (31) et le tableau arrière métallique (2), et le conducteur se trouve autour du substrat diélectrique (31).

7. Tableau blanc interactif selon la revendication 3, **caractérisé en ce que** l'ensemble d'antenne (3) comporte en outre un premier couvercle de blindage métallique (35), et le premier couvercle de blindage métallique (35) recouvre le substrat diélectrique (31) ; et
dans lequel le nombre d'unités d'antenne (32) sur l'ensemble d'antenne (3) est de deux ou plus, l'ensemble d'antenne (3) comporte en outre deux ou plus seconds couvercles de blindage métallique (34), et chaque second couvercle de blindage métallique (34) recouvre une unité d'antenne (32).

8. Tableau blanc interactif selon la revendication 3, **caractérisé en ce que** l'ensemble d'antenne (3) comporte en outre une puce radiofréquence (33) disposée sur le substrat diélectrique (31), et l'unité d'antenne (32) est connectée à la puce radiofréquence (33) ; et
dans lequel la puce radiofréquence (33) et l'unité d'antenne (32) sont situées sur la même surface du substrat diélectrique (31) ; et
dans lequel l'unité d'antenne (32) comporte une première unité d'antenne (321) et une seconde unité d'antenne (322),
et la première unité d'antenne (321) et la seconde unité d'antenne (322) sont situées respectivement sur deux côtés de la puce radiofréquence (33).

9. Tableau blanc interactif selon la revendication 8, **caractérisé en ce que** le substrat diélectrique (31) est pourvu d'une première zone de dégagement carrée (38) et d'une seconde zone de dégagement carrée (39) situées sur deux côtés de la puce radiofréquence (33) et sur une surface recouverte de cuivre (37), la première unité d'antenne (321) est située dans la zone de dégagement carrée, et la seconde unité d'antenne (322) est située dans la seconde zone de dégagement carrée (39) ; et dans lequel la première unité d'antenne (321) comporte un premier tronçon d'alimentation (3211), un premier tronçon en forme de L (3212), un premier tronçon en forme de T (3213), et un premier tronçon de mise à la terre (3214) ;
le premier tronçon d'alimentation (3211) s'étend depuis une première frontière (3215) dans la première zone de dégagement carrée (38) et est perpendiculaire à la première frontière (3215), une jonction entre le premier tronçon d'alimentation (3211) et la première frontière (3215) est connectée à une première ligne de transmission de signal (36), et la première frontière (3215) est une frontière verticale proche de la puce radiofréquence (33) ;
le premier tronçon en forme de L (3212), le premier tronçon en forme de T (3213) et le premier tronçon mise à la terre (3214) sont situés sur un côté du premier tronçon d'alimentation (3211) à l'opposé de la deuxième frontière (3216), la deuxième frontière (3216) est une frontière adjacente et perpendiculaire à la première frontière (3215), le premier tronçon en forme de L (3212) comporte un premier tronçon (32121) et un deuxième tronçon (32122), le premier tronçon (32121) est connecté au premier tronçon d'alimentation (3211), et un point de connexion est situé entre deux extrémités du premier tronçon d'alimentation (3211), le premier tronçon (32121) et le premier tronçon d'alimentation (3211) forment un angle obtus, et un premier angle droit formé par le premier tronçon (32121) et le deuxième tronçon (32122) fait face à la première frontière (3215) ;
le premier tronçon en forme de T (3213) comporte un troisième tronçon (32131) et un quatrième tronçon (32132), le troisième tronçon (32131) est situé sur un côté du premier tronçon (32121) à l'opposé de la première frontière (3215), et est arrangé parallèlement au premier tronçon (32121), et espacé de celui-ci, le quatrième tronçon (32132) est situé sur un côté du deuxième tronçon (32122) à l'opposé du premier tronçon d'alimentation (3211), et est arrangé parallèlement au deuxième tronçon (32122), et espacé de celui-ci, le quatrième tronçon (32132) s'étend jusqu'à une troisième frontière (3217) de manière à connecter la surface recouverte de cuivre (37), et la troisième frontière (3217) est une frontière parallèle à une deuxième frontière (3216) ;
le premier tronçon de mise à la terre (3214) comprend un cinquième tronçon (32141) et un sixième tronçon (32142), le cinquième tronçon (32141) s'étend depuis la première frontière (3215) dans la première zone de dégagement carrée (38) et est parallèle au premier tronçon d'alimentation (3211), et le sixième tronçon (32142) est arrangé parallèlement au premier tronçon (32121), et espacé de celui-ci.

10. Tableau blanc interactif selon la revendication 9, **caractérisé en ce que** la seconde unité d'antenne (322) comprend un deuxième tronçon d'alimentation (3221), un deuxième tronçon en forme de L, un deuxième tronçon en forme de T, et un deuxième tronçon de mise à la terre (3224) ;
le deuxième tronçon d'alimentation (3221) et le premier tronçon d'alimentation (3211) sont arrangés en image miroir avec la puce radiofréquence (33) en tant que centre, le deuxième tronçon en forme de T et le premier tronçon en forme de T (3213) sont arrangés en image miroir avec la puce radiofréquence (33) en tant que centre, et le deuxième tronçon de mise à la terre (3224) et le premier talon de mise à la terre (3214) sont arrangés en image miroir avec la puce de radiofréquence (33) en tant que centre ; le deuxième tronçon en forme de L (3222) comporte un septième tronçon (32221) et un huitième tronçon (32222), le septième tronçon (32221) est connecté au deuxième tronçon d'alimentation (3221), et un point de connexion est situé à une extrémité du deuxième tronçon d'alimentation (3221) à l'opposé d'une quatrième frontière (3225), le septième tronçon (32221) et le deuxième tronçon d'alimentation (3221) forment un angle obtus, un second angle droit formé par le septième tronçon (32221) et le huitième tronçon (32222) fait face à la quatrième frontière (3225), et la quatrième frontière (3225) est une frontière verticale dans la seconde zone de dégagement carrée (39) proche de la puce radiofréquence (33).

11. Tableau blanc interactif selon la revendication 8, **caractérisé en ce que** le substrat diélectrique (31) est pourvu d'une première zone de dégagement carrée (38) et d'une seconde zone de dégagement carrée (39) situées sur deux côtés de la puce radiofréquence (33) et sur une surface recouverte de cuivre (37), la première unité d'antenne (321) est située dans la zone de dégagement carrée, et la seconde unité d'antenne (322) est située dans la seconde zone de dégagement carrée (39) ; et dans lequel la première unité d'antenne (321) comporte un premier tronçon d'alimentation (3211), un premier tronçon en forme de L (3212) et un tronçon de mise à la terre en forme de L (3218) ;
le premier tronçon d'alimentation (3211) s'étend depuis une première frontière (3215) dans la première zone de dégagement carrée (38), et est perpendiculaire à la première frontière (3215), une jonction entre le premier tronçon d'alimentation (3211) et la première frontière (3215) est connectée à une première ligne de transmission de signal (36), la première frontière (3215) est une frontière verticale proche de la puce radiofréquence (33), et une seconde frontière (3216) est une frontière adjacente et perpendiculaire à la première frontière (3215) ;
le premier tronçon en forme de L (3212) et le tronçon de mise à la terre en forme de L (3218) sont situés sur un côté du premier tronçon d'alimentation (3211) à proximité de la seconde frontière (3216), le premier tronçon en forme de L (3212) comporte un premier tronçon (32121) et un deuxième tronçon (32122), le premier tronçon est connecté au premier tronçon d'alimentation (3211), et un point de connexion est situé à une extrémité du premier tronçon d'alimentation (3211) à l'opposé de la première frontière (3215), le premier tronçon (32121) et le premier tronçon d'alimentation (3211) forment un angle obtus, et un premier angle droit formé par le premier tronçon (32121) et le deuxième tronçon (32122) fait face à la première frontière (3215) ;
le tronçon de mise à la terre en forme de L comporte un neuvième tronçon (32181) et un dixième tronçon (32182), le neuvième tronçon (32181) est situé sur un côté du premier tronçon (32121) à l'opposé de la première frontière (3215), et est arrangé parallèlement au premier tronçon (32121), et espacé de celui-ci, le dixième tronçon (32182) est situé sur un côté du deuxième tronçon (32122) à l'opposé du premier tronçon d'alimentation (3211), et est parallèle au deuxième tronçon (32122), et espacé de celui-ci, et le dixième tronçon (32182) s'étend jusqu'à la deuxième frontière (3216) de manière à connecter la surface recouverte de cuivre (37).

12. Tableau blanc interactif selon la revendication 8, **caractérisé en ce que** la première unité d'antenne (321) et la seconde unité d'antenne sont des unités d'antenne Wi-Fi (32) ; ou
dans lequel les premières bandes de fréquence de rayonnement de la première unité d'antenne (321) et de la seconde unité d'antenne (322) sont des bandes de fréquence Wi-Fi 2.4G, les secondes bandes de fréquence de rayonnement de la première unité d'antenne (321) et de la seconde unité d'antenne (322) sont des bandes de fréquence Wi-Fi 5G.

13. Tableau blanc interactif selon l'une quelconque des revendications 1 à 7, **caractérisé en ce qu'**il comprend en outre une pièce décorative (7), dans lequel la pièce décorative (7) est connectée au tableau arrière métallique (2) et recouvre l'ensemble d'antenne (3) ; et
dans lequel la pièce décorative (7) est constituée de métal.

14. Tableau blanc interactif selon l'une quelconque des revendications 1 à 7, **caractérisé en ce qu'**il comprend en outre un couvercle arrière métallique (5), dans lequel le couvercle arrière métallique (5) est connecté au tableau arrière métallique (2) et recouvre la carte mère (6).

15. Tableau blanc interactif selon la revendication 14, **caractérisé en ce que** l'ensemble d'antenne (3) est situé à l'extérieur d'une zone recouverte par le couvercle arrière métallique (5) ; ou
dans lequel l'ensemble d'antenne (3) est situé dans une zone recouverte par le couvercle arrière métallique (5) ; ou
dans lequel l'ensemble d'antenne (3) comporte un premier ensemble d'antenne (3) et un second ensemble d'antenne (3), le premier ensemble d'antenne (3) est situé dans une zone recouverte par le couvercle arrière métallique (5), et le second ensemble d'antenne (3) est situé à l'extérieur de la région recouverte par le couvercle arrière métallique (5),
et le premier ensemble d'antenne (3), est un ensemble d'antenne (3) à point d'accès, PA, et le second ensemble d'antenne (3) est un ensemble d'antenne Wi-Fi (3).
